(19) Europäisches Patentamt
European Patent Office
Office européen des brevets

(11) EP 4 012 356 B1

(12) # EUROPÄISCHE PATENTSCHRIFT

(45) Veröffentlichungstag und Bekanntmachung des Hinweises auf die Patenterteilung:
**30.08.2023 Patentblatt 2023/35**

(21) Anmeldenummer: **21214085.9**

(22) Anmeldetag: **13.12.2021**

(51) Internationale Patentklassifikation (IPC):
***G01F 23/296** (2022.01)* ***G01F 25/20** (2022.01)*

(52) Gemeinsame Patentklassifikation (CPC):
**G01F 23/296; G01F 25/20**

(54) **VERFAHREN ZUM BESTIMMEN EINES FÜLLSTANDS, ULTRASCHALLSENSOR UND MESSEINRICHTUNG ZUM BESTIMMEN EINES VOLUMENS EINES FÜLLGUTS**

METHOD FOR DETERMINING A FILLING LEVEL, ULTRASONIC SENSOR AND MEASURING DEVICE FOR DETERMINING A VOLUME OF A FILLING MATERIAL

PROCÉDÉ DE DÉTERMINATION D'UN NIVEAU DE REMPLISSAGE, CAPTEUR À ULTRASONS ET DISPOSITIF DE MESURE PERMETTANT DE DÉTERMINER UN VOLUME D'UN PRODUIT DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2020 DE 102020013307**

(43) Veröffentlichungstag der Anmeldung:
**15.06.2022 Patentblatt 2022/24**

(73) Patentinhaber: **Pepperl+Fuchs SE**
**68307 Mannheim (DE)**

(72) Erfinder: **KNITTEL, Thomas**
**68307 Mannheim (DE)**

(74) Vertreter: **Schiffer, Axel Martin**
**Rundfunkplatz 2**
**80335 München (DE)**

(56) Entgegenhaltungen:
**EP-A1- 2 418 465** **EP-A1- 3 282 231**
**DE-A1-102009 055 262**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft in einem ersten Gesichtspunkt ein Verfahren zum Bestimmen eines Füllstands eines Füllguts in einem Behälter unter Verwendung eines Ultraschallsensors . In weiteren Aspekten bezieht sich die Erfindung auf einen Ultraschallsensor zum Durchführen des Verfahrens und auf eine Messeinrichtung zum Bestimmen eines Volumens eines Füllguts .

Ein gattungsgemäßes Verfahren ist beispielsweise in DE3812293A1 und EP2130006A1 beschrieben.

Bei einem gattungsgemäßen Verfahren zum Bestimmen eines Füllstands eines Füllguts in einem Behälter ist der Ultraschallsensor in oder an dem Behälter oberhalb möglicher Pegel eines Füllguts angeordnet und ein Füllstand des Füllguts in dem Behälter wird durch Messung eines Abstands des Pegels des Füllguts mit dem Ultraschallsensor bestimmt.

Ein gattungsgemäßer Ultraschallsensor weist einen Ultraschallsender zum Aussenden von Ultraschallpulsen, einen Ultraschallempfänger zum Empfangen von Ultraschallechos und eine Steuer- und Auswerteeinheit zum Ansteuern des Ultraschallsenders und zum Auswerten der von dem Ultraschallempfänger empfangenen Ultraschallechos auf.

In grundsätzlich bekannter Weise wird aus der Laufzeit der Ultraschallpulse unter Verwendung der Schallgeschwindigkeit in dem jeweiligen Medium ein Abstand der reflektierenden Oberfläche von dem Ultraschallsensor bestimmt. Als Laufzeit wird dabei diejenige Zeitdauer verstanden, die vom Aussenden eines Ultraschallpulses bis zu dem Zeitpunkt vergeht, zu welchem das zugehörige Ultraschallecho nachgewiesen wird.

Grundsätzlich können auch höhere Echos bei denen der Ultraschallpuls mehr als einmal zwischen dem Ultraschallsensor und der reflektierenden Oberfläche hin- und her läuft ausgewertet werden. Als erstes oder Primärecho wird derjenige Ultraschallpuls bezeichnet, der genau einmal an der Oberfläche des Füllguts reflektiert wurde. Entsprechend werden als zweite und dritte Echos diejenigen Ultraschallpulse bezeichnet, die zweimal beziehungsweise dreimal an der Oberfläche des Füllguts reflektiert wurden.

Die Begriffe Ultraschallecho und Echo werden in dieser Beschreibung synonym verwendet.

Die Messung des Füllstands von Behältern mit Ultraschallsensoren ist grundsätzlich, beispielsweise aus DE3812293A1 und EP2130006A1 bekannt.

Die Ultraschallsensoren müssen dabei für den Behälter und das jeweilige Füllgut geeignet sein. Dabei können insbesondere folgende Parameter eine Rolle spielen:
Durch die Höhe des Behälters und eine maximale Füllhöhe eines Füllguts sind Anforderungen an den Erfassungsbereich und einen erforderlichen Nahbereich des Ultraschallsensors gestellt. Für die akustischen Verhältnisse spielt die konkrete Geometrie des Behälters, beispielsweise dessen Form und Durchmesser, eine wichtige Rolle. Von Bedeutung ist dabei insbesondere, ob der Durchmesser eines Behälters so klein ist, dass die Schallkeulen der Ultraschallpulse mit den Behälterwänden in Kontakt kommen können. Auch können Störechos durch mögliche Anhaftungen an Behälterwänden, Kanten, Versteifungsrippen, Schweißnähte und dergleichen bedeutsam sein. Störquellen sind außerdem statische Einbauten in dem Behälter oder bewegliche Einbauten, wie beispielsweise Rührwerke.

Weiterhin spielen auch die Eigenschaften des jeweiligen Füllguts eine wichtige Rolle. Insbesondere bestimmt dessen Reflexionsfaktor für die verwendeten Ultraschallpulse die benötigte Funktionsreserve des Ultraschallsensors. Während auch mit einem kleinen Signal noch ein Abstand gemessen werden kann, wenn das jeweilige Füllgut eine gute Reflektivität aufweist, sind bei schlechter Reflektivität des Füllguts Ultraschallpulse mit höherer Energie und/oder empfindlichere Verstärker notwendig. Handelt es sich bei dem Füllgut um eine Flüssigkeit, ist außerdem zu berücksichtigen, dass sich oberhalb des Flüssigkeitspegels in dem Behälter naturgemäß ein von der Temperatur abhängiger Partialdampfdruck der jeweiligen Substanz bildet, der ebenfalls die akustischen Eigenschaften beeinflusst und insbesondere die Ultraschallwellen (temperaturabhängig) dämpft.

Die aus dem Stand der Technik bekannten Ultraschallsensoren verfügen in der Regel über eine Vielzahl von Einstell- und Parametriermöglichkeiten. Beispielsweise ist in DE3812293A1 und EP2130006A1 schon beschrieben, die Sendeleistung abstandsabhängig einzustellen. Aus DE3812293A1 ist außerdem bekannt, eine Dopplerverschiebung auszuwerten, wenn sich das Füllgut bewegt.

Die Anpassung der verschiedenen Messparameter an eine konkrete Messsituation, also einen Behälter und ein Füllgut, gestaltet sich im Einzelfall bisher aber aufwändig.

DE 10 2009 055 262 A1 offenbart ein gattungsgemäßes Verfahren, bei dem für einen bestimmten Behälter und ein bestimmtes Füllgut vor einem normalen Messbetrieb in einer Einlernphase gerätebezogene Testsignale und von einer Füllstandsoberfläche zu erwartende Antwortsignale bestimmt werden und Vergleichssignale ermittelt werden. Die Testsignale können dabei beliebig amplituden- und winkelmodulierte Basisband- oder Bandpasssignale sein.

Als eine Aufgabe der Erfindung kann angesehen werden, ein Verfahren zum Bestimmen eines Füllstands, einen Ultraschallsensor zur Durchführung des Verfahrens und eine Messeinrichtung zum Bestimmen eines Volumens eines Füllguts zu schaffen, die sich durch eine hohe Benutzerfreundlichkeit und einen geringen Energiebedarf auszeichnen.

Diese Aufgabe wird durch das Verfahren mit den Merkmalen des Anspruchs 1, den Ultraschallsensor mit den Merkmalen des Anspruchs 15 und durch die Messvorrichtung mit den Merkmalen des Anspruchs 17 gelöst.

Das Verfahren der oben angegebenen Art ist erfindungsgemäß dadurch weitergebildet, dass für einen bestimmten Behälter und ein bestimmtes Füllgut vor einem normalen Messbetrieb ein Einlernvorgang durchgeführt wird, dass bei dem Einlernvorgang mit dem Ultraschallsensor bei mindestens einem bestimmten Füllstand des Füllguts in dem Behälter mehrere Messungen mit dem Ultraschallsensor mit jeweils unterschiedlichen Betriebsparametern durchgeführt werden und dass dann, insbesondere für den einen bestimmten Füllstand, ein Satz von Betriebsparametern ausgewählt wird, und dass im normalen Messbetrieb, insbesondere bei dem einen bestimmten Füllstand, mit dem Ultraschallsensor Messungen mit dem zuvor im Einlernvorgang, insbesondere für diesen Füllstand, ausgewählten Satz von Betriebsparametern durchgeführt werden, wobei die Anzahl der Messungen, die bei einem bestimmten Füllstand im normalen Messbetrieb durchgeführt werden, kleiner ist als im Einlernvorgang.

Der Einlernvorgang kann bevorzugt automatisch ablaufen.

Der Ultraschallsensor der oben angegebenen Art dient zum Durchführen des erfindungsgemäßen Verfahrens und ist erfindungsgemäß dadurch weitergebildet, dass die Steuer- und Auswerteeinheit dazu eingerichtet ist, für einen bestimmten Behälter und ein bestimmtes Füllgut vor einem normalen Messbetrieb einen Einlernvorgang durchzuführen, bei dem Einlernvorgang bei mindestens einem bestimmten Füllstand in dem Behälter mehrere Messungen mit dem Ultraschallsensor mit jeweils unterschiedlichen Betriebsparametern durchzuführen und, insbesondere für den bestimmten Füllstand des Füllguts, einen Satz von Betriebsparametern auszuwählen, und dass die Steuerund Auswerteeinheit dazu eingerichtet ist, in dem normalen Messbetrieb des Ultraschallsensors, insbesondere bei einem bestimmten Füllstand, Messungen mit dem zuvor im Einlernvorgang, insbesondere für diesen Füllstand, ausgewählten Satz von Betriebsparametern durchzuführen, wobei die Anzahl der Messungen, insbesondere bei dem einen bestimmten Füllstand, im normalen Messbetrieb kleiner ist als im Einlernvorgang.

Wesentlich für das erfindungsgemäße Verfahren und den erfindungsgemäßen Sensor ist, dass vor einem normalen Messbetrieb bei mindestens einem Füllstand, insbesondere bei dem Füllstand, der bei einer erstmaligen Inbetriebnahme des Sensors, beispielsweise beim Einbau des Sensors in oder an einen bestehenden Behälter, vorhanden ist, ein Einlernvorgang durchgeführt und dabei der Betrieb des Sensors mit unterschiedlichen Betriebsparametern getestet wird. Betriebsparameter, die bei diesem Einlernvorgang als günstig erkannt werden, werden dann ausgewählt und gespeichert. Sodann wird der Sensor erfindungsgemäß im eigentlichen Messbetrieb mit den gespeicherten Betriebsparametern betrieben. Wenn der Füllstand, der dann gemessen wird, von dem Füllstand abweicht, für welchen die Betriebsparameter im Einlernvorgang ermittelt wurden, kann dieses entweder ignoriert werden oder, beispielsweise wenn die Abweichung des Füllstands größer ist als eine festzulegende Differenz, es kann erneut ein Einlernvorgang durchgeführt werden. Letzteres wird im Folgenden noch genauer erläutert.

Die erfindungsgemäße Messeinrichtung zum Bestimmen eines Volumens eines Füllguts weist einen Behälter zur Aufnahme des Füllguts und einen erfindungsgemäßen Ultraschallsensor auf, der in oder an dem Behälter oberhalb möglicher Pegel eines Füllguts angeordnet ist.

Unter dem Begriff des Füllstands wird die Füllhöhe eines Füllguts in dem Behälter verstanden. Das Füllgut kann dabei insbesondere flüssig sein, beispielsweise Benzin, Milch, Teig, flüssiger Zement. Auch feste Materialien, beispielsweise Schüttgüter, wie Sand, Getreide, Kies, aber auch Altkleidung können als Füllgut in Betracht kommen.

An der Oberfläche des Füllguts werden die Ultraschallpulse reflektiert. Diese Oberfläche kann, beispielsweise bei Flüssigkeiten in einem ruhenden Behälter, sehr glatt, kann aber auch, wie etwa bei grobem Kies, vergleichsweise rau sein.

Diese Oberfläche des Füllguts befindet sich in der Höhe des Pegels. Welche Pegel möglich sind, ergibt sich im Einzelfall aus der Geometrie des Behälters und der Anordnung des Ultraschallsensors an oder in dem Behälter. Der Ultraschallsensor muss zweckmäßig so angebracht werden, dass in jeder Situation Messungen möglich sind.

Die eigentliche Messung oder Bestimmung des Füllstands erfolgt durch Messen des Abstands zwischen der Oberfläche des Füllguts, also dem Pegel und dem Ultraschallsensor. So wird die Höhe des Pegels bestimmt. Weil die Geometrie des Behälters an sich oder ein Zusammenhang zwischen Füllstand und Volumen bekannt oder jedenfalls leicht ermittelbar ist, kann so das Volumen des Füllguts in dem Behälter gemessen werden.

Als normaler Messbetrieb wird derjenige Teil des erfindungsgemäßen Verfahrens und derjenige Betrieb der erfindungsgemäßen Messvorrichtung bezeichnet, wo Füllstände eines Füllguts gemessen werden, ohne dass Messungen zur Ermittlung von günstigen Betriebsparametern durchgeführt werden.

Im Unterschied dazu wird als Einlernvorgang derjenige Teil des erfindungsgemäßen Verfahrens und derjenige Betrieb der erfindungsgemäßen Messvorrichtung bezeichnet, bei denen bei einem bestimmten Füllstand eine Vielzahl von Messungen mit jeweils unterschiedlichen Betriebsparametern des Ultraschallsensors durchgeführt werden, um einen Satz von besonders günstigen Betriebsparametern zu ermitteln.

Als Betriebsparameter können insbesondere Parameter in Betracht kommen, die das Aussenden der Ultraschallpulse betreffen, insbesondere die Energie der Ultraschallsendepulse, die Anzahl der Anregungsperioden in einem einzelnen Ultraschallsendepuls, die Amplitude der Ultraschallsendepulse (variiert beispielsweise durch eine einstellbare Sendespannung). Weiterhin kann die Breite einer Schallkeule über einen zeitabhängigen Verstärker und/oder über eine zeitabhängige Detektionsschwelle eingestellt werden.

Sodann können Betriebsparameter variiert werden, die sich auf den Empfang der Ultraschallechos beziehen, insbesondere die Empfangsempfindlichkeit des verwendeten Ultraschallempfängers (variiert beispielsweise über einen einstellbaren und zeitabhängigen Verstärkungsfaktor und/oder über eine einstellbare, insbesondere zeitabhängige Auswerteschwelle). Diese Einstellungen haben direkten Einfluss auf die Breite und Länge der Schallkeule, bzw. den Erfassungsbereich. Störziele können unterdrückt werden, indem die Auswerteschwelle angehoben wird, wenn von dem jeweiligen Objekt Ultraschallechos erwartet werden.

Schließlich kann eine Messrate, also eine Anzahl von Messungen pro Zeiteinheit, variiert und im Hinblick auf den verwendeten Ultraschallsensor (insbesondere unter Berücksichtigung einer Totzeit des Ultraschallempfängers), den verwendeten Behälter und das zu vermessende Füllgut optimiert werden.

Es ist auch möglich, neben der Amplitude und Laufzeit auch die Frequenz der Ultraschallechos auszuwerten. Damit könnte man beispielsweise Fremdschall erkennen und unterdrücken. In diesem Fall kann man einen Akzeptanzbereich für die Frequenz der empfangenen Ultraschallechos definieren. Das wäre dann auch ein Parameter, den man einstellen könnte. Alle Echos außerhalb des Akzeptanzbereichs können verworfen werden.

Als Steuer- und Auswerteeinheit zum Ansteuern des Ultraschallsenders und zum Auswerten der von dem Ultraschallempfänger empfangenen Ultraschallechos können insbesondere programmierbare elektronische Komponenten, wie Mikrocontroller und vergleichbare Einrichtungen, beispielsweise FPGAs, zum Einsatz kommen.

Der Ultraschallsender und der Ultraschallempfänger können in an sich bekannter Weise durch einen einzigen Ultraschalltransceiver gebildet sein.

Als ein erster Kerngedanke der vorliegenden Erfindung kann angesehen werden, dass der Ultraschallsensor selbständig und automatisch für einen bestimmten Behälter, ein bestimmtes Füllgut und einem bestimmten Füllstand einen Satz von Betriebsparametern ermittelt, der für die jeweilige Situation am besten geeignet ist und auf den der Ultraschallsensor zukünftig, also im eigentlichen Messbetrieb, zurückgreift.

Im Vergleich zum Stand der Technik, wo die jeweiligen Parametersätze in der Regel zeitaufwendig manuell ermittelt werden müssen, können so Vorteile erreicht werden.

Ein sehr wesentlicher Vorteil der vorliegenden Erfindung ist außerdem, dass im eigentlichen Messbetrieb nur noch eine reduzierte Anzahl von Messungen bei einem bestimmten Füllstand durchgeführt werden und der Energiebedarf im eigentlichen Messbetrieb deshalb vergleichsweise gering ist.

Vorteilhafte Varianten des erfindungsgemäßen Verfahrens und bevorzugte Ausgestaltungen des erfindungsgemäßen Ultraschallsensors werden im Folgenden, insbesondere im Zusammenhang mit den abhängigen Ansprüchen und den beigefügten Figuren erläutert.

Grundsätzlich wird man Echos und Mehrfachechos beobachten, die von einer Oberfläche des Füllguts stammen. Darüber hinaus wird man Echos und gegebenenfalls Mehrfachechos beobachten, die von Strukturen des Behälters, beispielsweise von Schweißnähten, stammen. Wegen der Geometrie der Anordnung, sind die von der Oberfläche des Füllguts stammenden Echos bei gleichem Abstand in aller Regel deutlich stärker und können deshalb durch Amplitudenvergleich von den Echos getrennt werden, die von Strukturen des Behälters stammen.

Wenn in dieser Beschreibung nicht ausdrücklich erwähnt wird, ob es sich um ein Echo handelt, welches von einer Behälterstruktur stammt, oder um ein Echo, das von einer Oberfläche des Füllguts stammt, ist in aller Regel letzteres gemeint, also ein Echo, das von einer Oberfläche des Füllguts stammt.

Bei einer besonders bevorzugten Variante des erfindungsgemäßen Verfahrens werden die Amplituden der Ultraschallechos jeweils mit einem vom Füllstand des Füllguts in dem Behälter abhängigen Gewichtungsfaktor gewichtet. Die Erfindung hat erkannt, dass mit dieser Maßnahme abstandsabhängige Dämpfungen ausgeglichen werden können.

Besonders vorteilhaft können die Gewichtungsfaktoren so gewählt werden, dass die gewichteten Amplituden der von einer Oberfläche des Füllguts stammenden Ultraschallechos mindestens für einen Teilbereich der Füllstände, insbesondere bis zu einem maximalen Abstand des Sensors von der Oberfläche des Füllguts, unabhängig sind vom Füllstand. Bei einer einfachen Variante werden jedenfalls die Gewichtungsfaktoren für das erste Echo so gewählt, dass die gewichteten Amplituden des ersten von einer Oberfläche des Füllguts stammenden Echos mindestens für einen Teilbereich der Füllstände, insbesondere bis zu einem maximalen Abstand des Sensors von der Oberfläche des Füllguts, unabhängig sind vom Füllstand. Wenn die gewichteten Amplituden unabhängig sind vom Füllstand, kann unabhängig vom Füllstand die weitere Auswertung der Messsignale in gleicher Weise erfolgen.

Die Gewichtungsfaktoren können insbesondere so gewählt werden, dass die abstandsabhängige Dämpfung durch Anwendung der Gewichtungsfaktoren ganz oder weitgehend kompensiert wird. Das ist nur bis zu einem maximalen Erfassungsbereich möglich. Darüber hinaus werden die Rauschanteile im Signal überwiegen. Wenn die Gewichtungsfaktoren abstandsabhängig gewählt werden, werden automatisch auch die Mehrfachechos angehoben.

Da Mehrfachechos neben der Streckendämpfung mehrfach am Behälterdeckel und dem Füllgut reflektiert werden, werden diese zusätzlich gedämpft (die zugehörigen Reflexionsfaktoren sind kleiner als eins). Das führt dazu, dass das erste, primäre Echo meist das stärkste ist.

Beispielsweise können die Gewichtungsfaktoren so gewählt werden, dass das erste von einer Oberfläche des Füllguts stammende Echo die höchste gewichtete Amplitude aufweist. So kann bei der weiteren Auswertung leicht unterschieden werden, um was für ein Echo (erstes, zweites usw.) es sich jeweils handelt.

Bei einer weiteren bevorzugten Variante des erfindungsgemäßen Verfahrens und des erfindungsgemäßen Sensors werden die Gewichtungsfaktoren so gewählt, dass die abstandsabhängige Dämpfung der Echos dergestalt kompensiert wird, dass die Amplitude der Echos von der Füllgutoberfläche innerhalb des Erfassungsbereichs des Sensors unabhängig wird vom Abstand der Oberfläche des Füllguts zu dem erfindungsgemäßen Sensor.

Dadurch wird als wesentlicher Vorteil erreicht, dass nach Anwendung der Gewichtungsfaktoren alle Echos von der Oberfläche des Füllguts die gleiche Amplitude aufweisen. Dann entspricht das erste Echo dem Abstand zur Füllgutoberfläche. Eventuelle Störechos von Einbauten in dem Behälter haben normalerweise eine niedrigere Amplitude.

Bei idealer Reflexion des Ultraschalls an der Oberfläche des Füllguts und am Behälterdeckel hätten Mehrfachechos die gleiche Amplitude wie das erste Echo. Das erste Echo von der Oberfläche des Füllgut ist aber an sich leicht identifizierbar, weil es zeitlich das erste ist, das beobachtet wird.

Wenn in dem beobachteten Intensitätsverlauf nach einem beobachteten ersten Maximum ein zweites Maximum folgt, welches höher ist als das erste Maximum, kann das erste Maximum einem Echo an einer Behälterstruktur zugeordnet werden und das zweite Maximum kann dem ersten Echo von der Oberfläche des Füllgut zugeordnet werden.

In einer alternativen Ausgestaltung des erfindungsgemäßen Verfahrens und des erfindungsgemäßen Sensors können die Gewichtungsfaktoren so gewählt werden, dass die Mehrfachechos von der Füllgutoberfläche jeweils die gleiche Amplitude aufweisen. Mehrfachechos können im Prinzip anhand der doppelten, dreifachen usw. Laufzeit identifiziert und ausgeschlossen werden.

Bei einfachen Varianten des Verfahrens wird nur das erste Ultraschallecho ausgewertet.

Grundsätzlich können sämtliche Parameter des Ultraschallsensors im Einlernvorgang variiert werden. Vergleichsweise rasch kann man zu gut geeigneten Parametern gelangen, wenn man mindestens oder ausschließlich folgende Parameter variiert und auswählt: Energie und Dauer der Ultraschallpulse, Empfindlichkeit eines Ultraschallempfängers des Ultraschallsensors und ein vom Füllstand abhängiger Gewichtungsfaktor mindestens oder ausschließlich für die Amplitude des ersten Echos. Der Energiebedarf kann damit auch im Einlernvorgang reduziert werden.

Besonders effektiv kann der Einlernvorgang durchgeführt werden, wenn für einen bestimmten Füllstand die Empfindlichkeit eines Ultraschallempfängers des Ultraschallsensors bei den Messungen nach und nach gesteigert wird.

Als Kriterium für die Auswahl eines Satzes von Betriebsparametern kann insbesondere die Funktionsreserve dienen. Ein Satz von Betriebsparametern kann bevorzugt ausgewählt werden, wenn ein gewünschter Wert einer Funktionsreserve erreicht wird. Der Wert der Funktionsreserve kann zum Beispiel so gewählt werden, dass ein bestimmtes Echo, insbesondere das erste Echo, noch bei Absinken der Amplitude auf 50% eines aktuell gemessenen Werts nachweisbar ist.

Grundsätzlich kann ein vollständiger Befüllvorgang und/oder ein vollständiger Entleerungsvorgang des Behälters durchgeführt werden und der Einlernvorgang kann für eine Vielzahl von Füllständen im gesamten Bereich des Füllstands durchgeführt werden. Insbesondere kann der Einlernvorgang für praktisch alle möglichen Füllstände im gesamten Bereich des Füllstands durchgeführt werden.

Es wird aber in der Praxis zahlreiche Fälle geben, wo ein vollständiger Entleerungsvorgang oder ein vollständiger Befüllungsvorgang nicht oder nicht sinnvoll möglich ist.

In diesen Fällen kann es von Vorteil sein, den Einlernvorgang jedenfalls dann durchzuführen, wenn sich der Füllstand des Füllguts auf einen Wert ändert, bei dem noch kein Einlernvorgang durchgeführt wurde. Hierzu kann beispielsweise abgefragt werden, ob sich der Füllstand im Vergleich zu einem Ausgangswert um mehr als einen festzulegenden Wert geändert hat.

Prinzipiell ist es aber auch möglich, dass sich die Verhältnisse bei an sich unverändertem Füllstand ändern. Beispielsweise können sich der Dampfdruck einer Flüssigkeit, und damit auch die Dämpfung der Ultraschallpulse in der Atmosphäre oberhalb des Flüssigkeitsspiegels, aufgrund einer geänderten Temperatur erheblich ändern.

Für diese Situationen ist eine Variante des Verfahrens von Vorteil, bei der ein Satz von Betriebsparametern korrigiert wird, wenn bestimmte Amplituden der Ultraschallechos, insbesondere die Amplitude des ersten Ultraschallechos, um mehr als einen festzulegenden Wert von zuvor gemessenen Werten abweichen beziehungsweise abweicht.

Die Betriebsparameter können auch temperaturabhängig gewählt und abgespeichert werden. Wenn sich die Temperatur von einer ersten Temperatur auf eine zweite, von der ersten verschiedene zweite Temperatur ändert, kann, insbesondere automatisch, von einem ersten Satz von Betriebsparametern, der zur ersten Temperatur gehört, übergegangen werden zu einem zweiten Satz von Betriebsparametern, der zur zweiten Temperatur gehört und sich von dem ersten Satz von Betriebsparametern unterscheidet.

Im Hinblick auf das Auslesen von Messdaten oder die Übermittlung von Konfigurationsdaten sind Varianten des erfindungsgemäßen Verfahrens und der erfindungsgemäßen Messvorrichtung bevorzugt, bei denen eine Funkschnittstelle vorhanden ist, die mit dem Ultraschallsensor wirkungsmäßig verbunden ist, zum Übertragen von Daten, insbesondere Konfigurationsdaten, an den Ultraschallsensor und/oder zum Übertragen von Daten, insbesondere Messdaten, von dem Ultraschallsensor an eine entfernte Einheit. Die entfernte Einheit kann insbesondere ein Messrechner, ein Server oder eine Prozessleitstelle sein. Die Datenübertragung über die Funkschnittstelle von und/oder zu dem Ultraschallsensor kann bevorzugt über und/oder in das Internet, insbesondere von einer und/oder in eine Cloud, erfolgen.

Weitere Vorteile und Merkmale der Erfindung werden im Folgenden mit Bezug auf die beigefügten Figuren erläutert. Darin zeigen:

Figur 1: Eine schematische Skizze einer erfindungsgemäßen Messvorrichtung mit einem erfindungsgemäßen Ultraschallsensor zum Durchführen des erfindungsgemäßen Verfahrens;

Figur 2: Eine schematische Darstellung eines typischen Verlaufs von Messsignalen des Ultraschallsensors für zwei verschiedene Messsituationen;

Figur 3: eine schematische Skizze zur Erläuterung der Abschwächung der Echopulse mit zunehmendem Abstand der den Schall reflektierenden Oberfläche;

Figur 4: eine schematische Skizze zur Erläuterung eines abstandsabhängigen Gewichtungsfaktors;

Figur 5: ein Diagramm mit einem real gemessenen Signal mit einem ersten, einem zweiten und einem dritten Echo im Wesentlichen ohne Störechos;

Figur 6: ein weiteres Diagramm mit einem real gemessenen Signal mit einem ersten, einem zweiten und einem dritten Echo und zusätzlichen Störechos.

Die in Figur 1 schematisch dargestellte erfindungsgemäße Messeinrichtung 200 zum Bestimmen eines Volumens eines Füllguts 40 weist als wesentliche Komponenten einen Behälter 50 zur Aufnahme des Füllguts 40 und einen erfindungsgemäßen Ultraschallsensor 100 auf. In dem gezeigten schematischen Beispiel ist der Ultraschallsensor 100 an einem Deckel 52 des Behälters 50 mittig und damit oberhalb von möglichen Pegeln p des Füllguts 40 angeordnet.

Bei dem Füllgut 40 soll es sich beispielsweise um eine Flüssigkeit handeln, welche in dem Behälter 50 in einer Füllhöhe h und damit bis zu einem Pegel p enthalten ist. Durch Messung eines Abstands d zwischen dem Ultraschallsensor 100 und dem Pegel p kann, weil das Volumen über eine, wenn nicht bekannte, dann jedenfalls leicht bestimmbare monotone Funktion mit der Füllhöhe h und damit mit dem Pegel p zusammenhängt, in an sich bekannter Weise das Volumen des Füllguts 40 in dem Behälter 50 bestimmt werden.

Diese Messung wird mit dem erfindungsgemäßen Ultraschallsensor 100 durchgeführt, der zum Durchführen des Verfahrens ausgebildet ist und als Bestandteile zunächst einen Ultraschallsender 12 zum Aussenden der Ultraschallpulse, einen Ultraschallempfänger 14 zum Empfangen von der Oberfläche des Füllguts 40 zurückreflektierten Ultraschallechos aufweist. In an sich bekannter Weise können der Ultraschallsender 12 und der Ultraschallempfänger 14 durch einen einzigen Ultraschalltransceiver 10 gebildet sein.

Als wesentliche Komponente des erfindungsgemäßen Ultraschallsensors 100 ist eine Steuer- und Auswerteeinheit 20 vorhanden zum Ansteuern des Ultraschallsenders 12 und zum Auswerten der von dem Ultraschallempfänger 14 empfangenen Ultraschallechos. In Figur 2 sind Ultraschallechos durch schematische Kurven q, Q dargestellt. Die Steuer- und Auswerteeinheit 20 kann beispielsweise durch einen Mikrocontroller verwirklicht sein. Wesentlich ist, dass die Steuer- und Auswerteeinheit 20 dazu eingerichtet ist, für den konkret vorhandenen Behälter 50 und das konkret zu vermessende Füllgut 40 vor einem normalen Messbetrieb einen Einlernvorgang durchzuführen. Bei diesem Einlernvorgang steuert die Steuer- und Auswerteeinheit 20 den Ultraschallsender 12 dergestalt an, dass bei mindestens einem Füllstand h des Füllgut 40 in dem Behälter 50 mehrere Messungen mit dem Ultraschallsensor 100 mit jeweils unterschiedlichen Betriebsparametern durchgeführt werden. Sodann wählt die Steuer- und Auswerteeinheit aufgrund der gewonnenen Messdaten und unter Verwendung eines in ihr hinterlegten Algorithmus einen Satz von Betriebsparametern aus. Beispielsweise kann dieser Algorithmus einen Satz von Betriebsparametern dann auswählen, wenn eine bestimmte gewünschte Funktionsreserve erreicht ist.

Schließlich ist die Steuer- und Auswerteeinheit 20 dazu eingerichtet, in einem sich an den Einlernvorgang anschließenden normalen Messbetrieb des Ultraschallsensors 100 bei einem bestimmten Füllstand h Messungen mit dem zuvor im Einlernvorgang für diesen Füllstand h ausgewählten Satz von Betriebsparametern durchzuführen, wobei die Anzahl der Messungen bei einem bestimmten Füllstand im normalen Meßbetrieb aber kleiner ist als im Einlernvorgang. Dadurch kann der Energiebedarf der Messvorrichtung 200 reduziert werden.

Besonders bevorzugt sind der Ultraschallsensor 100 und Behälter 50 so angeordnet und ausgerichtet oder positioniert, dass die schallreflektierende Oberfläche des Füllguts 40 senkrecht steht zu einer Achse des Ultraschallsensors 100 oder, genauer, zu einer Achse des Ultraschalltransceivers 10. Ist dieses nicht verwirklicht, etwa bei Schüttgütern, gestaltet sich die Auswertung schwieriger.

Figur 2 zeigt eine schematische Darstellung von Verläufen Q, q des Signals I des Ultraschalltransceivers 10 aufgetragen gegen die Zeit t für zwei verschiedene Pegel p. Die erste, in durchgezogener Linie dargestellte Kurve Q stammt von einer Messung bei einem ersten, höheren, Pegel h und damit bei einem kleineren Abstand d der Oberfläche eines ersten Füllguts 40 von dem Ultraschallsensor 100. Die zweite, in gestrichelter Linie dargestellte Kurve q stammt von einer Messung bei einem zweiten, niedrigeren Pegel h und damit bei einem größeren Abstand d der Oberfläche eines zweiten Füllguts von dem Ultraschallsensor 100. Das zweite Füllgut kann von dem ersten Füllgut verschieden sein. Die Verläufe q und Q sollen qualitativ, nicht quantitiv, das Absinken der reflektierten Amplitude mit abnehmendem Pegel, also zunehmendem Abstand, und das Absinken der Amplitude mit zunehmender Ordnung des Echos verdeutlichen. Real gemessene Signals in Figur 5 und Figur 6 gezeigt.

In dem in Figur 2 schematisch gezeigten Beispiel zeigen die Kurven Q, q, die jeweils ausgehen von einem Wert der Amplitude a0, bei dem der Ultraschalltranceiver 10 noch vom Sendevorgang schwingt, jeweils ein erstes, ein zweites und ein drittes Echo. Die ersten Echos werden auch als Primärechos bezeichnet. Das erste Echo der Kurve Q mit der Maximalamplitude A1 wird zum Zeitpunkt T1 gemessen. Das zweite Echo mit der Maximalamplitude A2 und das dritte Echo mit der Maximalamplitude A3 der Kurve Q erscheinen bei den Zeitpunkten T2 beziehungsweise T3. Die Maximalamplituden der Echos nehmen vom ersten Echo bis zum dritten Echo kontinuierlich ab. Gründe hierfür sind die zusätzlichen Dämpfung aufgrund der weiteren Reflexionen und die zusätzlichen Dämpfung aufgrund des mehrfachen Durchtritt durch die Atmosphäre 42 oberhalb des Füllguts 40.

Im Vergleich zu den Maximalamplituden der Echos der Kurve Q sind die Maximalamplituden der Echos der Kurve q (erstes Echo: Maximalamplitude a1, Zeitpunkt t1; zweites Echo: Maximalamplitude a2, Zeitpunkt t2; drittes Echo: Maximalamplitude a3, Zeitpunkt t3) durchweg geringer als die entsprechenden Echos der Kurve Q. Wesentlicher Grund hierfür ist wieder die zusätzliche Dämpfung in der Atmosphäre 42 aufgrund des längeren Laufwegs der Ultraschallpulse.

Häufig wird man die Daten der Kurven Q, q direkt für die Auswertung heranziehen. Im Prinzip könnten dann für jedes Echo und für jeden Füllstand separate Auswertungsalgorithmen verwendet werden. Beispielsweise könnte man für jedes Echo und jeden Füllstand eine separate Auswerteschwelle verwenden. Weil das aber aufwändig ist, wird das in der Regel nicht gemacht und es werden nur die Maxima ausgewertet. Bevorzugt sind die Auswertealgorithmen für alle Echos gleich. Dann bleibt, wie im Stand der Technik, die Frage, welches Echo das richtige ist. Hier bringt die vorliegende Erfindung erhebliche Verbesserungen.

Um die abstandsabhängige Dämpfung, die beispielsweise verursacht sein kann durch einen Partialdampfdruck des Füllguts in der Atmosphäre 42 oberhalb des Pegels p, auszugleichen, wird bevorzugt jedes der Ultraschallechos jeweils mit einem vom Füllstand h des Füllguts 40 in dem Behälter 50 abhängigen Gewichtungsfaktor gewichtet. Der Gewichtungsfaktor ist eine Funktion, die vom Abstand d des Sensors zur Oberfläche des Füllguts und von einem für den Ultraschall wirksamen Dämpfungsfaktor abhängt.

Beispielsweise kann die Maximalamplitude des ersten Echos mit einem Faktor g1(h), die maximale Amplitude des zweiten Echos mit einem Faktor g2(h) und die maximale Amplitude des dritten Echos mit einem Faktor g3(h) gewichtet, also multipliziert werden. Diese Gewichtungsfaktoren g1(h), g2(h), g3(h) sind jeweils Funktionen des Füllstands h und können im Einlernvorgang durch Messung ermittelt werden.

Besonders bevorzugt wird der Gewichtungsfaktor g1(h) so gewählt, dass die gewichteten Amplituden des ersten Echos unabhängig sind vom Füllstand h. Es ist aber auch möglich, die Gewichtungsfaktoren g1(h), g2(h), g3(h) so zu wählen, dass die gewichteten Amplituden aller Echos unabhängig sind vom Füllstand h. Bei einer bevorzugten Variante der Erfindung reicht es, einen entfernungsabhängigen Gewichtungsfaktor einzuführen in der Art, dass die Primärechoamplituden vom Abstand des Sensors zur Oberfläche des Füllguts unabhängig ist. Die Amplituden der Echos g2(h) und g3(h) werden damit auch entfernungsunabhängig.

Zweckmäßig können die Gewichtungsfaktoren g1(h), g2(h), g3(h) so gewählt werden, dass das erste Echo die höchste gewichtete Amplitude aufweist. So kann bei der weiteren Auswertung leicht erkannt werden, um was für ein Echo (erstes, zweites, drittes) es sich handelt.

Einige bedeutsame physikalische Effekte und eine Variante der Erfindung werden mit Bezug auf die Figuren 3 und 4 erläutert.

Allgemein wird ein Ultraschallsignal A umso stärker gedämpft, je größer die Strecke ist, über welche sich dieses Ultraschallsignal durch die Luft fortbewegt hat.

Die Amplitude A eines Ultraschallsignals in Abhängigkeit des Abstands d der reflektierenden Oberfläche eines Füllguts von dem Sensor hängt von

- der Frequenz f des Ultraschallsignals,
- der Temperatur T der Luft,
- der Luftfeuchte h und
- dem Luftdruck p

ab wie folgt:

$$A \sim exp\left(-f^2(d-d0)\alpha(T,h,p\,)\right)$$

d0 ist dabei ein Normabstand und $\alpha$ ist eine skalare Funktion der Temperatur, der Luftfeuchte und des Luftdrucks. $\alpha$ hängt außerdem ab von der Gaszusammensetzung in der Luft (also den Partialdrücken der einzelnen Bestandteile der Luft).

Darüber hinaus gibt es einen durch die Geometrie des Behälters bedingten geometrischen Abschwächungsfaktor. Im Fall von zylindrischen Behältern ist dieser Faktor proportional zu $1/d^2$.

In Figur 3 ist schematisch dargestellt, wie sich die Echoamplitude mit zunehmendem Abstand abschwächt. Dargestellt sind in durchgezogenen Linien Echos von Oberflächen in den Abständen d1, d2, d3, d4, und d5 von dem Sensor. Es soll sich jeweils um das erste Echo handeln, welches auch als Primärecho bezeichnet wird. Der Darstellung in Figur 3 liegt die Annahme zugrunde, dass die Echos jeweils logarithmisch (Hüllkurve) verstärkt werden. Auf der vertikalen Achse ist mithin der Logarithmus der vom Sensor gemessenen Amplitude A aufgetragen. Ohne Gewichtungsfaktor findet man dann näherungsweise einen linearen Abfall in Abhängigkeit des Abstands d der reflektierenden Oberfläche von dem Sensor. Dieser Abfall ist in Figur 3 eingezeichnet als eine in durchgezogener Linie dargestellte Gerade mit negativer Steigung.

Figur 4 zeigt sodann einen abstandsabhängigen Gewichtungsfaktor. Über einen Bereich von Abständen bis dmax steigt der Gewichtungsfaktor dabei bis auf einen Maximalwert an und bleibt bei dann bei Abständen größer als dmax konstant. Der Wert dmax entspricht im gezeigten Beispiel dem Wert d5 in Figur 3.

Multiplikation des abstandsabhängigen Gewichtungsfaktors der Figur 4 mit der Echokurve liefert die in Figur 3 gestrichelt eingezeichneten Echos, bei denen die gewichtete Echoamplitude näherungsweise unabhängig ist vom Abstand d der den Schall reflektierenden Oberfläche vom Sensor.

Figur 5 zeigt reale Messdaten, die mit einem Behälter gewonnen wurden, der im Wesentlichen keine Strukturen aufweist, die zu Störechos führen. Dargestellt ist die Amplitude eines gemessenen Ultraschallsignals (vertikale Achse) in Abhängigkeit der Zeit (horizontale Achse). Das gemessene Ultraschallsignal zeigt ein erstes Echo E1, ein zweites Echo E2 und ein drittes Echo E3. Die Struktur etwa zwischen den Punkten 50 und 300 auf der horizontalen Skala gehört zum Ausschwingen des Ultraschalltransceivers nach dem Aussenden des Ultraschallpulses (Sendeburst). Wie ersichtlich befinden sich zwischen den einzelnen Echos keine weiteren signifikanten Strukturen.

Figur 6 zeigt ein weiteres Beispiel von realen Messdaten, die nun mit einem modifizierten Behälter gewonnen wurden. Dargestellt ist wieder die Amplitude eines gemessenen Ultraschallsignals (vertikale Achse) in Abhängigkeit der Zeit (horizontale Achse). Neben den Echos, die in Figur 6 nicht erneut gekennzeichnet sind, wurden bei diesem Behälter zusätzliche Echos festgestellt, nämlich ein erstes Störecho S1, ein zweites Störecho S2 und ein drittes Störecho S3.

Nach einer Montage des Ultraschallsensors 100 an oder in dem Behälter ist der Füllstand h zunächst unbekannt.

Der Ultraschallsensor 100 führt dann erfindungsgemäß im Rahmen des Einlernvorgangs mehrere Messungen durch. Beispielsweise kann von Messung zu Messung die Empfindlichkeit des Ultraschallempfängers 14 erhöht werden und die Ultraschallechos können, wie vorstehend beschrieben, gewichtet werden.

Wenn ein Echo erkannt wird und eine vorgegebene Funktionsreserve erreicht ist, können die Parameter für diesen Füllstand h gespeichert werden. Wenn mehrere Echos erkannt werden, kann dasjenige mit der stärksten gewichteten Echoamplitude ausgewählt werden. Bei nachfolgenden Messungen im normalen Messbetrieb arbeitet der Ultraschallsensor 100 dann mit den dem jeweiligen Füllstand zugeordneten Satz von Betriebsparametern.

Wenn der Behälter 50 befüllt oder entleert wird, ändert sich der Füllstand h. Wenn diese Änderung signifikant ist, mithin die Änderung des Füllstands h größer ist als eine festzulegende Abweichung, kann der Ultraschallsensor 100 erneut den Einlernvorgang durchlaufen, also erneut mehrere Messungen durchführen, um in dem beschriebenen Verfahren wieder einen günstigen Satz von Betriebsparametern zu ermitteln und für den neuen Füllstand abzuspeichern.

Insbesondere kann nach einem kompletten Befüllvorgang zu jedem Füllstand h ein günstiger Satz von Betriebsparametern gespeichert sein. Diese Sätze von Betriebsparametern sind spezifisch für einen bestimmten Behälter 50 und ein bestimmtes Füllgut 40 und hängen, außerdem von weiteren Parametern, insbesondere der Temperatur, ab.

Wesentlich für die Erfindung ist, dass der Ultraschallsensor 100 bei den Messungen im normalen Meßbetrieb, mit den zuvor abgespeicherten füllstandsabhängigen Einstellungen arbeitet, weshalb es im normalen Meßbetrieb nicht mehr erforderlich ist, bei jedem Füllstand h mehrere Messungen durchzuführen. Dadurch kann signifikant Energie gespart werden.

Der Einlernvorgang kann bevorzugt erneut durchgeführt werden, wenn die Amplituden der Echos um mehr als einen festzulegenden Wert von gespeicherten Werten abweichen, was beispielsweise bei Temperaturänderungen vorkommen kann.

Bei Schüttgütern muss zwischen dem Befüllungs- und dem Entleerungsvorgang unterschieden werden. Während es bei manchen Anwendungen wichtig ist, während der Befüllung zu messen (beispielsweise bei der Messung des Füllstands eines Altglascontainers) und der Entleerungsvorgang an sich nicht interessant ist, ist es bei anderen Anwendungen umgekehrt. Zum Beispiel muss bei einem Zementsilo die Entleerung überwacht werden, sodass dieser wieder aufgefüllt werden kann, wenn er leer ist.

Die Erfindung kann beispielsweise für Füllstandsmessungen an Tanks und ähnlichen Behältern eingesetzt werden. Bei dem Medium in dem Tank oder Behälter kann es sich um Flüssigkeiten oder Schüttgüter, wie Getreide, handeln.

Die Erfindung kann auch vorteilhaft bei Behältern der Abfallwirtschaft (Glas-, Papier-, Kunststoff-, Altkleider-Sammelbehälter) zum Einsatz kommen.

Bei mobilen Tanks ist in der Regel keine Energiequelle vorhanden. Der Ultraschallsensor kann dann mit einer Batterie versorgt werden. Die Messdaten des Sensors können dabei über eine Funkschnittstelle, beispielsweise über das Internet in eine Cloud übertragen werden. Der Anwender kann dann bequem mit den Messdaten in der Cloud seine Prozesse steuern.

Die Ermittlung der optimalen Sensorkonfiguration hängt im Einzelnen von der verwendeten Hardware ab.

In einem ersten Beispiel kann die Hardware aus einer logarithmischen Verstärkerstufe (Hüllkurve) und einer Sendestufe mit konstanter Sendeamplitude (z.B. 300Vpp) bestehen. Die Breite eines Sendebursts kann bevorzugt einstellbar sein.

Beispielsweise können eine Sendeimpulsbreite und/oder ein Erkennungskriterium für das Echo (z.B. Amplitudenschwelle oder Höhe des Echoanstiegs) einstellbar sein.

In einem zweiten Beispiel kann die Hardware aus einem linearen Verstärker (Hüllkurve) und einer Sendestufe mit konstanter Sendeamplitude (z.B. 300Vpp) bestehen. Die Breite des Sendebursts ist wieder bevorzugt einstellbar.

Hier kann man bevorzugt mit einer zeitabhängigen Verstärkung arbeiten. Insbesondere kann unmittelbar nach dem Sendeimpuls die Verstärkung gering und mit zunehmender Echolaufzeit nach und nach bis auf einen Maximalwert ansteigend gewählt werden.

In diesem Fall können beispielsweise die Sendeimpulsbreite, der Verstärkungsfaktor, ein Erkennungskriterium für das Echo (z.B. Amplitudenschwelle oder Höhe des Echoanstiegs) und/oder eine Steigerung des Verstärkungsfaktors mit der Zeit einstellbar sein.

Folgende Strategien zur Ermittlung des relevanten auszuwertenden Echos von der Füllgutoberfläche können zum Einsatz kommen:

<u>Fall 1: (logarithmischer Verstärker):</u>

1. Zunächst wird eine Messung mit geringer Sendeenergie durchgeführt. Dabei ist die Ausschwingzeit gering und es kann festgestellt werden, ob sich im Nahbereich ein Objekt befindet.

2. Wenn ein Objekt innerhalb einer bestimmten Entfernung (z.B. dem Doppelten des Nahbereichs) erkannt wird, dann Messung mit geringer Sendeenergie. Wenn im Nahbereich kein Objekt erkannt wird, kann die Energie sukzessive erhöht werden.

3. Die gemessenen Echos werden mit dem Gewichtungsfaktor multipliziert. Dieses kann unter der Annahme erfolgen, dass gewichtete Echoamplituden vom Füllgut eine höhere Amplitude als Störechos von Strukturen des Behälters aufweisen.

4. Für die Auswertung kann dann angenommen werden, dass das erste hohe Echo dem Füllgut entspricht.

<u>Fall 2 linearer Verstärker:</u>

1. Zunächst wird eine Messung mit geringer Sendeenergie durchgeführt.

2. Wenn ein Objekt innerhalb einer bestimmten Entfernung (z.B. dem Doppelten des Nahbereichs) erkannt wird, dann Messung mit geringer Sendeenergie. Wenn im Nahbereich kein Objekt erkannt wird, kann die Energie sukzessive erhöht werden.

3. Die Verstärkung wird so eingestellt, dass keine Übersteuerung auftritt.

4. Die gemessenen Echos werden mit dem Gewichtungsfaktor multipliziert.

5. Eine Schwelle wird so gewählt, dass sie 20% bis 50% unterhalb des ersten hohen Echos liegt.

Eine weitere Strategie kann auch darin bestehen, die Echos von Messung zu Messung engmaschig nachzuverfolgen. Ein Füllstand kann sich nicht schlagartig ändern. Außerdem muss bei einer Füllstandmessung immer ein Echo gemessen werden. Wenn der Tank leer ist, misst der Sensor den Abstand zum Behälterboden.

Mit der vorliegenden Erfindung werden ein vorteilhaftes neuartiges Verfahren zur Bestimmung eines Füllstands eines Füllguts in einem Behälter, ein Ultraschallsensor zum Durchführen dieses Verfahrens und eine Messvorrichtung zum Bestimmen eines Volumens eines Füllguts geschaffen, welche im Vergleich zum Stand der Technik erhebliche Gebrauchsvorteile bieten und außerdem im Vergleich mit bisherigen Lösungen einen geringeren Energiebedarf haben.

Bezugszeichenliste

| | |
|---|---|
| 10 | Ultraschalltransceiver |
| 20 | Steuer- und Auswerteeinrichtung |
| 21 | Verbindung zwischen Ultraschalltransceiver 10 und Steuer- und Auswerteeinrichtung 20 |
| 30 | Funkschnittstelle zum Beispiel zum Internet |
| 40 | Füllgut |
| 42 | Atmosphäre im Inneren des Behälters 50 oberhalb von Füllgut 40 |
| 50 | Behälter |
| 52 | Deckel |
| 100 | Ultraschallsensor |
| 200 | Messeinrichtung zum Bestimmen eines Volumens eines Füllguts 40 |
| a0 | Schwingungsamplitude des Ultraschalltransceivers 10 nach Ende des Sendevorgangs |
| a1 | Amplitude des ersten Echos, Kurve q |
| a2 | Amplitude des zweiten Echos, Kurve q |
| a3 | Amplitude des dritten Echos, Kurve q |
| A1 | Amplitude des ersten Echos, Kurve Q |
| A2 | Amplitude des zweiten Echos, Kurve Q |
| A3 | Amplitude des dritten Echos, Kurve Q |
| d | Abstand Pegel p - Ultraschallsensor 100 |
| d1 | erster Wert des Abstands zwischen Pegel p und Ultraschallsensor 100 |
| d2 | zweiter Wert des Abstands zwischen Pegel p und Ultraschallsensor 100 |
| d3 | dritter Wert des Abstands zwischen Pegel p und Ultraschallsensor 100 |
| d4 | vierter Wert des Abstands zwischen Pegel p und Ultraschallsensor 100 |
| d5 | fünfter Wert des Abstands zwischen Pegel p und Ultraschallsensor 100 |
| d6 | sechster Wert des Abstands zwischen Pegel p und Ultraschallsensor 100 |
| dmax | Maximalwert des Abstands, bis zu dem ein Gewichtungsfaktor g variiert wird |
| E1 | erstes gemessenes Echo |
| E2 | zweites gemessenes Echo |
| E3 | drittes gemessenes Echo |
| g(d) | Gewichtungsfaktor g in Abhängigkeit des Abstands d |
| h | Füllstand |
| I | Intensität |
| t | Zeit, Zeitkoordinate |
| t1 | Zeitpunkt des Maximums des ersten Echos, Kurve q |
| t2 | Zeitpunkt des Maximums des zweiten Echos, Kurve q |
| t3 | Zeitpunkt des Maximums des dritten Echos, Kurve q |
| T1 | Zeitpunkt des Maximums des ersten Echos, Kurve Q |
| T2 | Zeitpunkt des Maximums des zweiten Echos, Kurve Q |
| T3 | Zeitpunkt des Maximums des dritten Echos, Kurve Q |
| S1 | erstes Störecho |
| S3 | zweites Störecho |
| S2 | drittes Störecho |
| p | Pegel, Oberfläche des Füllguts |

| | |
|---|---|
| q | Ultraschallsignal bei einem ersten Füllstand |
| Q | Ultraschallsignal bei einem zweiten Füllstand, der höher ist als der erste Füllstand |
| U | Logarithmus der von dem Ultraschallsensor 100 gemessenen Amplitude A |
| U1 | Wert von U gemessen beim Abstand d1 |
| U2 | Wert von U gemessen beim Abstand d2 |
| U3 | Wert von U gemessen beim Abstand d3 |
| U4 | Wert von U gemessen beim Abstand d4 |

**Patentansprüche**

1. Verfahren zum Bestimmen eines Füllstands eines Füllguts in einem Behälter unter Verwendung eines Ultraschallsensors,

    bei dem der Ultraschallsensor (100) in oder an dem Behälter (50) oberhalb möglicher Pegel (p) eines Füllguts (40) angeordnet ist,
    bei dem durch Messung eines Abstands (d) eines Pegels (p) eines Füllguts (40) mit dem Ultraschallsensor (100) ein Füllstand (h) des Füllguts (40) in dem Behälter (50) bestimmt wird,
    bei dem für einen bestimmten Behälter (50) und ein bestimmtes Füllgut (40) vor einem normalen Messbetrieb, insbesondere automatisch, ein Einlernvorgang durchgeführt wird,
    wobei bei dem Einlernvorgang mit dem Ultraschallsensor (100) bei mindestens einem Füllstand (h) des Füllguts (40) in dem Behälter (50) mehrere Messungen mit dem Ultraschallsensor (100) mit jeweils unterschiedlichen Betriebsparametern durchgeführt werden,
    wobei die Betriebsparameter das Aussenden von Ultraschallpulsen, den Empfang von Ultraschallechos, das Auswerten von Ultraschallechos und/oder eine Anzahl von Messungen pro Zeiteinheit betreffen,
    **dadurch gekennzeichnet, dass**
    ein Satz von Betriebsparametern ausgewählt wird,
    wobei im normalen Messbetrieb mit dem Ultraschallsensor (100) Messungen mit dem zuvor im Einlernvorgang) ausgewählten Satz von Betriebsparametern durchgeführt werden, wobei die Anzahl der Messungen, die bei einem Füllstand (h) im normalen Messbetrieb durchgeführt werden, kleiner ist als im Einlernvorgang.

2. Verfahren nach Anspruch 1,
    **dadurch gekennzeichnet,**
    **dass** die Amplituden (a1, a2, a3; A1, A2, A3) der Ultraschallechos jeweils mit einem vom Füllstand (h) des Füllguts (40) in dem Behälter (50) abhängigen Gewichtungsfaktor (g1(h), g2(h), g3(h)) gewichtet werden.

3. Verfahren nach Anspruch 1 oder 2,
    **dadurch gekennzeichnet,**
    **dass** die Gewichtungsfaktoren (g1(h)) so gewählt sind, dass die gewichteten Amplituden des ersten von einer Oberfläche (p) des Füllguts (40) stammenden Echos mindestens für einen Teilbereich der Füllstände, insbesondere bis zu einem maximalen Abstand (d) des Ultraschallsensors (100) von der Oberfläche (p) des Füllguts, unabhängig sind vom Füllstand (h).

4. Verfahren nach einem der Ansprüche 1 bis 3,
    **dadurch gekennzeichnet,**
    **dass** die Gewichtungsfaktoren (g1(h), g2(h), g3(h)) so gewählt sind, dass die gewichteten Amplituden aller von einer Oberfläche (p) des Füllguts stammenden Echos mindestens für einen Teilbereich der Füllstände, insbesondere bis zu einem maximalen Abstand (d) des Ultraschallsensors (100) von der Oberfläche (p) des Füllguts, unabhängig sind vom Füllstand (h).

5. Verfahren nach einem der Ansprüche 1 bis 4,
    **dadurch gekennzeichnet,**
    **dass** die Gewichtungsfaktoren (g1(h), g2(h), g3(h)) so gewählt sind, dass das erste von einer Oberfläche des Füllguts stammende Echo die höchste gewichtete Amplitude aufweist.

6. Verfahren nach einem der Ansprüche 1 bis 5,
    **dadurch gekennzeichnet,**
    **dass** der Satz von Betriebsparametern, der für einen bestimmten Füllstand (h) ausgewählt wird, mindestens folgende Parameter beinhaltet:

- Energie und Dauer der Ultraschallpulse,
- Empfindlichkeit eines Ultraschallempfängers (14) des Ultraschallsensors (100) und
- ein vom Füllstand (h) abhängiger Gewichtungsfaktor (g1(h)) mindestens für die Amplitude (a1, A1) des ersten Echos.

**7.** Verfahren nach einem der Ansprüche 1 bis 6,
**dadurch gekennzeichnet,**
**dass** der Einlernvorgang durchgeführt wird, wenn sich der Füllstand (h) auf einen Wert ändert, bei dem noch kein Einlernvorgang durchgeführt wurde.

**8.** Verfahren nach einem der Ansprüche 1 bis 7,
**dadurch gekennzeichnet,**
**dass** in der Einlernphase ein vollständiger Befüllvorgang und/oder ein vollständiger Entleerungsvorgang des Behälters (50) durchgeführt wird und dass der Einlernvorgang für eine Vielzahl von Füllständen im gesamten Bereich des Füllstands (h) durchgeführt wird.

**9.** Verfahren nach einem der Ansprüche 1 bis 8,
**dadurch gekennzeichnet,**
**dass** ein Satz von Betriebsparametern korrigiert wird, wenn bestimmte Amplituden (a1, a2, a3; A1, A2, A3) der Ultraschallechos, insbesondere die Amplitude des ersten Ultraschallechos (a1; A1), um mehr als einen festzulegenden Wert von zuvor gemessenen Werten abweichen beziehungsweise abweicht.

**10.** Verfahren nach einem der Ansprüche 1 bis 9,
**dadurch gekennzeichnet,**
**dass** bei dem Einlernvorgang für einen bestimmten Füllstand (h) die Empfindlichkeit eines Ultraschallempfängers (14) des Ultraschallsensors (100) bei den Messungen nach und nach gesteigert wird.

**11.** Verfahren nach einem der Ansprüche 1 bis 10,
**dadurch gekennzeichnet,**
**dass** bei dem Einlernvorgang ein Satz von Betriebsparametern ausgewählt wird, bei dem ein gewünschter Wert einer Funktionsreserve erreicht wird.

**12.** Verfahren nach einem der Ansprüche 1 bis 11,
**dadurch gekennzeichnet,**
**dass** der Wert der Funktionsreserve so gewählt wird, dass ein bestimmtes Echo, insbesondere das erste Echo, noch bei Absinken der Amplitude auf 50% eines aktuell gemessenen Werts nachweisbar ist.

**13.** Verfahren nach einem der Ansprüche 1 bis 12,
**dadurch gekennzeichnet,**
**dass** eine Funkschnittstelle (30) vorhanden ist, die mit dem Ultraschallsensor (100) wirkungsmäßig verbunden ist, zum Übertragen von Daten, insbesondere Konfigurationsdaten, an den Ultraschallsensor (100) und/oder zum Übertragen von Daten, insbesondere Messdaten, von dem Ultraschallsensor (100) an eine entfernte Einheit.

**14.** Verfahren nach Anspruch 13,
**dadurch gekennzeichnet,**
**dass** die Datenübertragung über die Funkschnittstelle (30) von und/oder zu dem Ultraschallsensor (100) über und/oder in das Internet, insbesondere von einer und/oder in eine Cloud, erfolgt.

**15.** Ultraschallsensor zum Durchführen des Verfahrens nach einem der Ansprüche 1 bis 14,

mit einem Ultraschallsender (12) zum Aussenden von Ultraschallpulsen,
mit einem Ultraschallempfänger (14) zum Empfangen von Ultraschallechos und
mit einer Steuer- und Auswerteeinheit (20) zum Ansteuern des Ultraschallsenders (12) und zum Auswerten der von dem Ultraschallempfänger (14) empfangenen Ultraschallechos (q, Q, a1,..,a3, A1,..,A3),
wobei die Steuer- und Auswerteeinheit (20) dazu eingerichtet ist,

• für einen bestimmten Behälter (50) und ein bestimmtes Füllgut (40) vor einem normalen Messbetrieb einen Einlernvorgang durchzuführen,
• bei dem Einlernvorgang bei mindestens einem Füllstand (h) in dem Behälter (50) mehrere Messungen mit dem Ultraschallsensor (100) mit jeweils unterschiedlichen Betriebsparametern durchzuführen,
wobei die Betriebsparameter das Aussenden von Ultraschallpulsen, den Empfang von Ultraschallechos, das Auswerten von Ultraschallechos und/oder eine Anzahl von Messungen pro Zeiteinheit betreffen, und
• einen Satz von Betriebsparametern auszuwählen und abzuspeichern, und

wobei die Steuer- und Auswerteeinheit (20) dazu eingerichtet ist,

• in dem normalen Messbetrieb des Ultraschallsensors (100) Messungen mit dem zuvor im Einlernvorgang ausgewählten Satz von Betriebsparametern durchzuführen,
• wobei die Anzahl der Messungen bei einem Füllstand (h) im normalen Messbetrieb kleiner ist als im Einlernvorgang.

**16.** Ultraschallsensor nach Anspruch 15,
**dadurch gekennzeichnet,**
**dass** der Ultraschallsender (12) und der Ultraschallempfänger (14) durch einen einzigen Ultraschalltranceiver (10) gebildet sind.

**17.** Messeinrichtung mit einem Behälter (50) zur Aufnahme des Füllguts (40) und

mit einem Ultraschallsensor (100) nach Anspruch 15 oder 16,
wobei der Ultraschallsensor (100) in oder an dem Behälter (50) oberhalb möglicher Pegel (p) eines Füllguts (40) angeordnet ist.

## Claims

**1.** Method for determining a fill level of a filling material in a container using an ultrasonic sensor,

in which the ultrasonic sensor (100) is arranged in or on the container (50) above a possible level (p) of a filling material (40),
in which a fill level (h) of the filling material (40) in the container (50) is determined by measuring a distance (d) of a level (p) of a filling material (40) by means of the ultrasonic sensor (100),
in which a learning process is carried out, in particular automatically, for a specific container (50) and a specific filling material (40) prior to a normal measurement mode,
wherein, during the learning process by means of the ultrasonic sensor (100), for at least one fill level (h) of the filling material (40) in the container (50), a plurality of measurements are carried out by means of the ultrasonic sensor (100), each with different operating parameters,
wherein the operating parameters concern the emission of ultrasonic pulses, the reception of ultrasonic echoes, the evaluation of ultrasonic echoes, and/or a number of measurements per unit time,
**characterized in that**
a set of operating parameters is selected,
wherein, during the normal measurement mode, measurements are carried out by means of the ultrasonic sensor (100) using the set of operating parameters previously selected in the learning process, wherein the number of measurements carried out for a fill level (h) in the normal measurement mode is smaller than in the learning process.

**2.** Method according to claim 1,
**characterized in that**
the amplitudes (a1, a2, a3; A1, A2, A3) of the ultrasonic echoes are each weighted with a weighting factor (g1(h), g2(h), g3(h)) dependent on the fill level (h) of the filling material (40) in the container (50).

**3.** Method according to claim 1 or 2,
**characterized in that**
the weighting factors (gl(h)) are selected such that the weighted amplitudes of the first echo coming from a surface (p) of the filling material (40) are independent of the fill level (h) at least for a sub-range of the fill levels, in particular up to a maximum distance (d) of the ultrasonic sensor (100) from the surface (p) of the filling material.

**4.** Method according to any one of claims 1 to 3,
**characterized in that**
the weighting factors (g1(h), g2(h), g3(h)) are selected such that the weighted amplitudes of all the echoes coming from a surface (p) of the filling material are independent of the fill level (h) at least for a sub-range of the fill levels, in particular up to a maximum distance (d) of the ultrasonic sensor (100) from the surface (p) of the filling material.

**5.** Method according to any one of claims 1 to 4,
**characterized in that**
the weighting factors (g1(h), g2(h), g3(h)) are selected such that the first echo coming from a surface of the filling material has the highest weighted amplitude.

**6.** Method according to any one of claims 1 to 5,
**characterized in that**
the set of operating parameters selected for a specific fill level (h) includes at least the following parameters:

- energy and duration of the ultrasonic pulses,
- sensitivity of an ultrasonic receiver (14) of the ultrasonic sensor (100) and
- a weighting factor (gl(h)) dependent on the fill level (h) at least for the amplitude (a1, A1) of the first echo.

**7.** Method according to any one of claims 1 to 6,
**characterized in that**
the learning process is carried out when the fill level (h) changes to a value for which no learning process has yet been carried out.

**8.** Method according to any one of claims 1 to 7,
**characterized in that**
a complete filling process and/or a complete emptying process of the container (50) is carried out in the learning phase, and **in that** the learning process is carried out for a plurality of fill levels within the entire range of the fill level (h).

**9.** Method according to any one of claims 1 to 8,
**characterized in that**
a set of operating parameters is corrected when specific amplitudes (a1, a2, a3; A1, A2, A3) of the ultrasonic echoes, in particular the amplitude of the first ultrasonic echo (a1; A1), deviate(s) from previously measured values by more than a specified value.

**10.** Method according to any one of claims 1 to 9,
**characterized in that**,
during the learning process for a specific fill level (h), the sensitivity of an ultrasonic receiver (14) of the ultrasonic sensor (100) is gradually increased during the measurements.

**11.** Method according to any one of claims 1 to 10,
**characterized in that**,
during the learning process, a set of operating parameters is selected for which a desired value of a functional reserve is achieved.

**12.** Method according to any one of claims 1 to 11,
**characterized in that**
the value of the functional reserve is selected such that a specific echo, in particular the first echo, can still be detected when the amplitude drops to 50% of a currently measured value.

**13.** Method according to any one of claims 1 to 12,
**characterized in that**
a radio interface (30) is present, which is operatively connected to the ultrasonic sensor (100), for the transmission of data, in particular configuration data, to the ultrasonic sensor (100) and/or for the transmission of data, in particular measurement data, from the ultrasonic sensor (100) to a remote unit.

**14.** Method according to claim 13,
**characterized in that**
the data transmission via the radio interface (30) from and/or to the ultrasonic sensor (100) takes place over and/or in the Internet, in particular from and/or to a cloud.

**15.** Ultrasonic sensor for carrying out the method according to any one of claims 1 to 14,

having an ultrasonic transmitter (12) for emitting ultrasonic pulses,
having an ultrasonic receiver (14) for receiving ultrasonic echoes and
having a control and evaluation unit (20) for actuating the ultrasonic transmitter (12) and for evaluating the ultrasonic echoes (q, Q, a1,..,a3, A1,..,A3) received by the ultrasonic receiver (14),
wherein the control and evaluation unit (20) is designed

- to carry out a learning process for a specific container (50) and a specific filling material (40) prior to a normal measurement mode,
- to carry out, during the learning process, for at least one fill level (h) in the container (50), a plurality of measurements by means of the ultrasonic sensor (100), each with different operating parameters,

wherein the operating parameters concern the emission of ultrasonic pulses, the reception of ultrasonic echoes, the evaluation of ultrasonic echoes, and/or a number of measurements per unit time, and

- to select and store a set of operating parameters, and wherein the control and evaluation unit (20) is designed
- to carry out, in the normal measurement mode of the ultrasonic sensor (100), measurements using the set of operating parameters previously selected in the learning process,
- wherein the number of measurements for a fill level (h) in the normal measurement mode is smaller than in the learning process.

**16.** Ultrasonic sensor according to claim 15,
**characterized in that**
the ultrasonic transmitter (12) and the ultrasonic receiver (14) are formed by a single ultrasonic transceiver (10).

**17.** Measuring device,

having a container (50) for receiving the filling material (40) and
having an ultrasonic sensor (100) according to claim 15 or 16,
wherein the ultrasonic sensor (100) is arranged in or on the container (50) above a possible level (p) of a filling material (40).

**Revendications**

**1.** Procédé pour déterminer un niveau de remplissage d'un produit de remplissage dans un récipient au moyen d'un capteur ultrasonore,

selon lequel le capteur ultrasonore (100) est disposé dans ou sur le récipient (50) au-dessus de niveaux (p) possibles d'un produit de remplissage (40),
selon lequel un niveau de remplissage (h) du produit de remplissage (40) dans le récipient (50) est déterminé par mesure d'une distance (d) par rapport à un niveau (p) d'un produit de remplissage (40) avec le capteur ultrasonore (100),
selon lequel un processus d'apprentissage est mis en oeuvre, en particulier de manière automatique, pour un récipient (50) déterminé et un produit de remplissage (40) déterminé avant un mode de mesure normal,
dans lequel selon le processus d'apprentissage avec le capteur ultrasonore (100) plusieurs mesures sont effectuées avec le capteur ultrasonore (100) avec des paramètres de fonctionnement respectivement différents pour au moins un niveau de remplissage (h) du produit de remplissage (40) dans le récipient (50),
dans lequel les paramètres de fonctionnement concernent l'émission d'impulsions ultrasonores, la réception d'échos ultrasonores, l'évaluation d'échos ultrasonores et/ou un nombre de mesures par unité de temps,
**caractérisé en ce que**

un groupe de paramètres de fonctionnement est choisi,
dans lequel dans le mode de mesure normal des mesures sont effectuées avec le capteur ultrasonore (100) avec le groupe de paramètres de fonctionnement choisi préalablement dans le processus d'apprentissage, dans lequel le nombre de mesures, qui sont effectuées pour un niveau de remplissage (h) dans le mode de mesure normal, est plus petit que dans le processus d'apprentissage.

**2.** Procédé selon la revendication 1,
**caractérisé en ce que**
les amplitudes (a1, a2, a3 ; A1, A2, A3) des échos ultrasonores sont pondérées respectivement avec un facteur de pondération (g1(h), g(2)h, g3(h)) dépendant du niveau de remplissage (h) du produit de remplissage (40) dans le récipient (50) .

**3.** Procédé selon la revendication 1 ou 2,
**caractérisé en ce que**
les facteurs de pondération (gl(h)) sont choisis de sorte que les amplitudes pondérées du premier écho provenant d'une surface (p) du produit de remplissage (40) au moins pour une zone partielle des niveaux de remplissage, en particulier jusqu'à une distance maximale (d) du capteur ultrasonore (100) par rapport à la surface (p) du produit de remplissage, sont indépendantes du niveau de remplissage (h).

**4.** Procédé selon l'une quelconque des revendications 1 à 3,
**caractérisé en ce que**
les facteurs de pondération (g1(h), g(2)h, g3(h)) sont choisis de sorte que les amplitudes pondérées de tous les échos provenant d'une surface (p) du produit de remplissage au moins pour une zone partielle des niveaux de remplissage, en particulier jusqu'à une distance maximale (d) du capteur ultrasonore (100) par rapport à la surface (p) du produit de remplissage, sont indépendantes du niveau de remplissage (h).

**5.** Procédé selon l'une quelconque des revendications 1 à 4,
**caractérisé en ce que**
les facteurs de pondération (g1(h), g(2)h, g3(h)) sont choisis de sorte que le premier écho provenant d'une surface du produit de remplissage présente l'amplitude pondérée la plus élevée.

**6.** Procédé selon l'une quelconque des revendications 1 à 5,
**caractérisé en ce que**
le groupe de paramètres de fonctionnement, qui est choisi pour un niveau de remplissage (h) déterminé, comporte au moins les paramètres suivants :

- l'énergie et la durée des impulsions ultrasonores,
- la sensibilité d'un récepteur d'ultrasons (14) du capteur ultrasonore (100) et
- un facteur de pondération (gl(h)) dépendant du niveau de remplissage (h) au moins pour l'amplitude (a1, A1) du premier écho.

**7.** Procédé selon l'une quelconque des revendications 1 à 6,
**caractérisé en ce que**
le processus d'apprentissage est mis en œuvre lorsque le niveau de remplissage (h) change pour une valeur pour laquelle encore aucun processus d'apprentissage n'a été mis en œuvre.

**8.** Procédé selon l'une quelconque des revendications 1 à 7,
**caractérisé en ce que**
dans la phase d'apprentissage un processus de remplissage complet et/ou un processus de vidage complet du récipient (50) est mis en œuvre et que le processus d'apprentissage est mis en œuvre pour une pluralité de niveaux de remplissage dans toute la zone du niveau de remplissage (h).

**9.** Procédé selon l'une quelconque des revendications 1 à 8,
**caractérisé en ce que**
un groupe de paramètres de fonctionnement est corrigé lorsque des amplitudes (a1, a2, a3 ; A1, A2, A3) déterminées des échos ultrasonores, en particulier l'amplitude du premier écho ultrasonore (a1 ; A1) diffèrent ou diffère de plus d'une valeur à fixer parmi des valeurs préalablement mesurées.

**10.** Procédé selon l'une quelconque des revendications 1 à 9,
**caractérisé en ce que**
lors du processus d'apprentissage pour un niveau de remplissage (h) déterminé la sensibilité d'un récepteur d'ultrasons (14) du capteur ultrasonore (100) est augmentée petit à petit pour les mesures.

**11.** Procédé selon l'une quelconque des revendications 1 à 10,
**caractérisé en ce que**
lors du processus d'apprentissage un groupe de paramètres de fonctionnement est choisi, pour lequel une valeur souhaitée d'une réserve de fonction est atteinte.

**12.** Procédé selon l'une quelconque des revendications 1 à 11,
**caractérisé en ce que**
la valeur de la réserve de fonction est choisie de sorte qu'un écho déterminé, en particulier le premier écho, peut encore être détecté lors de la baisse de l'amplitude à 50 % d'une valeur actuellement mesurée.

**13.** Procédé selon l'une quelconque des revendications 1 à 12,
**caractérisé en ce que**
une interface radio (30) est présente, qui est reliée de manière active au capteur ultrasonore (100), pour transmettre des données, en particulier des données de configuration, au capteur ultrasonore (100) et/ou pour transmettre des données, en particulier des données de mesure, à partir du capteur ultrasonore (100) à une unité éloignée.

**14.** Procédé selon la revendication 13,
**caractérisé en ce que**
la transmission de données s'effectue par l'intermédiaire de l'interface radio (30) à partir de et/ou vers le capteur ultrasonore (100) par l'intermédiaire de et/ou dans Internet, en particulier à partir d'un et/ou dans un nuage.

**15.** Capteur ultrasonore pour mettre en œuvre le procédé selon l'une quelconque des revendications 1 à 14,

avec un émetteur d'ultrasons (12) pour émettre des impulsions ultrasonores,
avec un récepteur d'ultrasons (14) pour recevoir des échos ultrasonores et
avec une unité de commande et d'évaluation (20) pour commander l'émetteur d'ultrasons (12) et pour évaluer les échos ultrasonores (q, Q, a1, .., a3, A1, .., A3) reçus par le récepteur d'ultrasons (14),
dans lequel l'unité de commande et d'évaluation (20) est conçue

• pour un récipient (50) déterminé et un produit de remplissage (40) déterminé pour mettre en œuvre un processus d'apprentissage avant un mode de mesure normal,
• pour le processus d'apprentissage pour au moins un niveau de remplissage (h) pour mettre en œuvre dans le récipient (50) plusieurs mesures avec le capteur ultrasonore (100) avec des paramètres de fonctionnement respectivement différents,

dans lequel les paramètres de fonctionnement concernent l'envoi d'impulsions ultrasonores, la réception d'échos ultrasonores, l'évaluation d'échos ultrasonores et/ou un nombre de mesures par unité de temps, et

• pour choisir et mettre en mémoire un groupe de paramètres de fonctionnement, et

dans lequel l'unité de commande et d'évaluation (20) est conçue

• dans le mode de mesure normal du capteur ultrasonore (100) pour effectuer des mesures avec le groupe de paramètres de fonctionnement choisis préalablement dans le processus d'apprentissage,
• dans lequel le nombre de mesures pour un niveau de remplissage (h) dans le mode de mesure normal est plus petit que dans le processus d'apprentissage.

**16.** Capteur ultrasonore selon la revendication 15,
**caractérisé en ce que**
l'émetteur d'ultrasons (12) et le récepteur d'ultrasons (14) sont formés par un seul émetteur-récepteur d'ultrasons (10) .

**17.** Dispositif de mesure

avec un récipient (50) pour la réception du produit de remplissage (40) et
avec un capteur ultrasonore (100) selon la revendication 15 ou 16,
dans lequel le capteur ultrasonore (100) est disposé dans ou sur le récipient (50) au-dessus de niveaux (p) possibles d'un produit de remplissage (40).

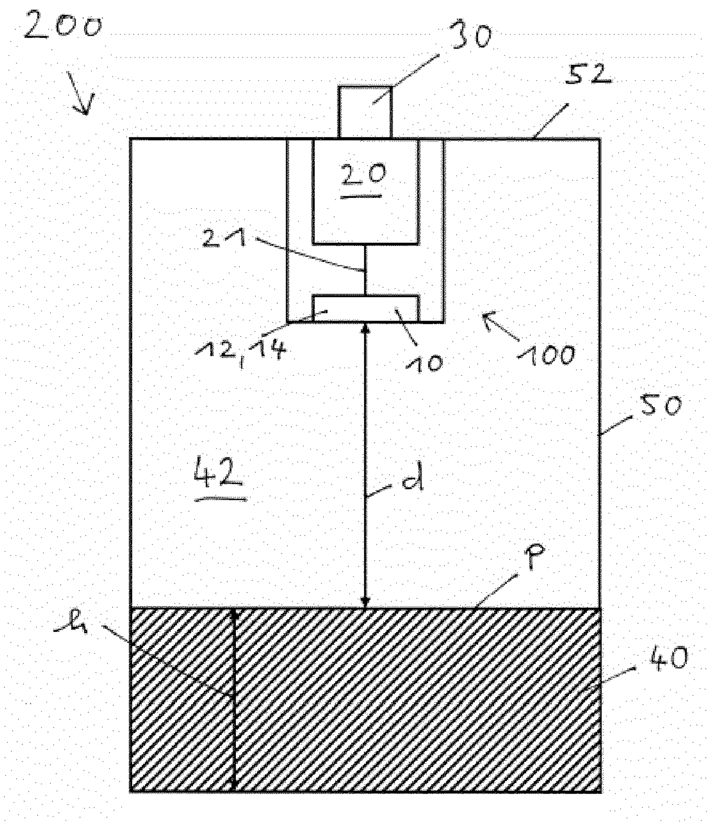
200
30
52
20
21
12, 14
10
100
50
42
d
p
h
40

Fig. 1

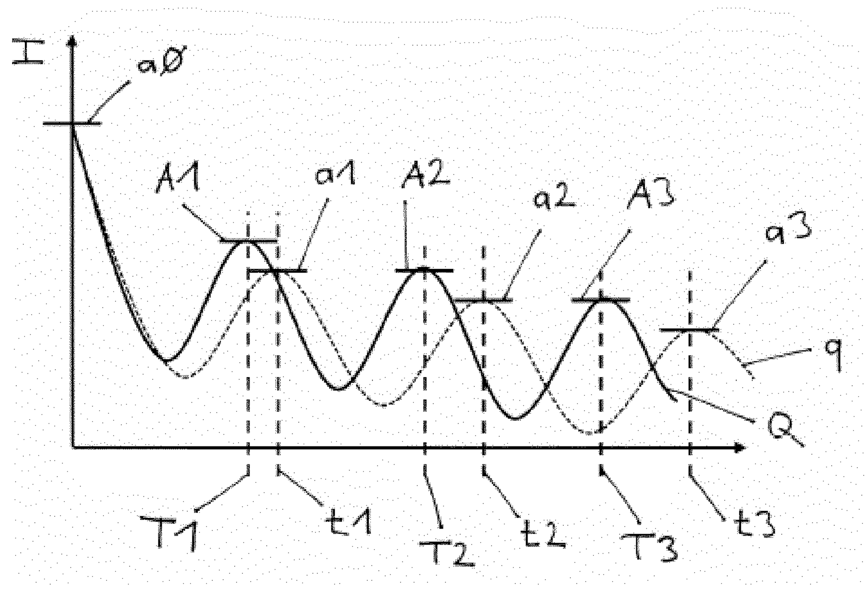
I
aØ
A1
a1
A2
a2
A3
a3
q
Q
T1
t1
T2
t2
T3
t3

Fig. 2

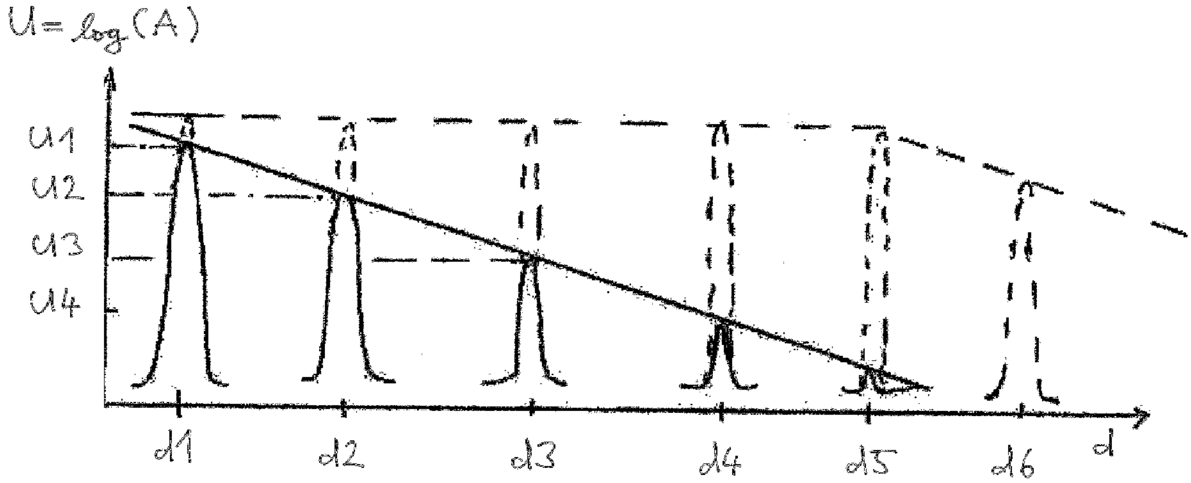


Fig. 3

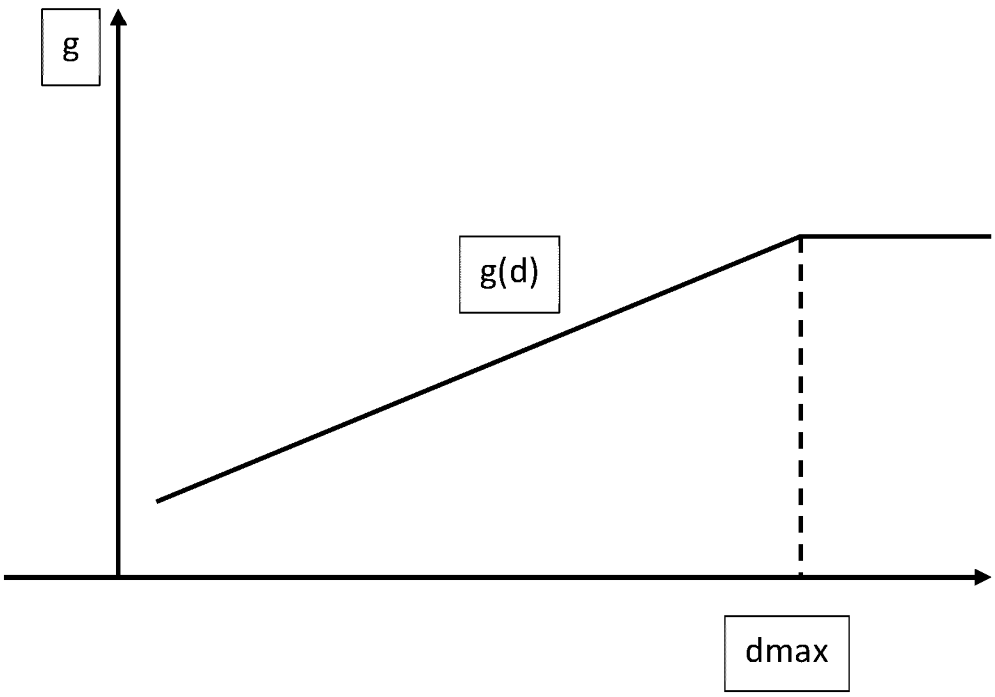


Fig. 4

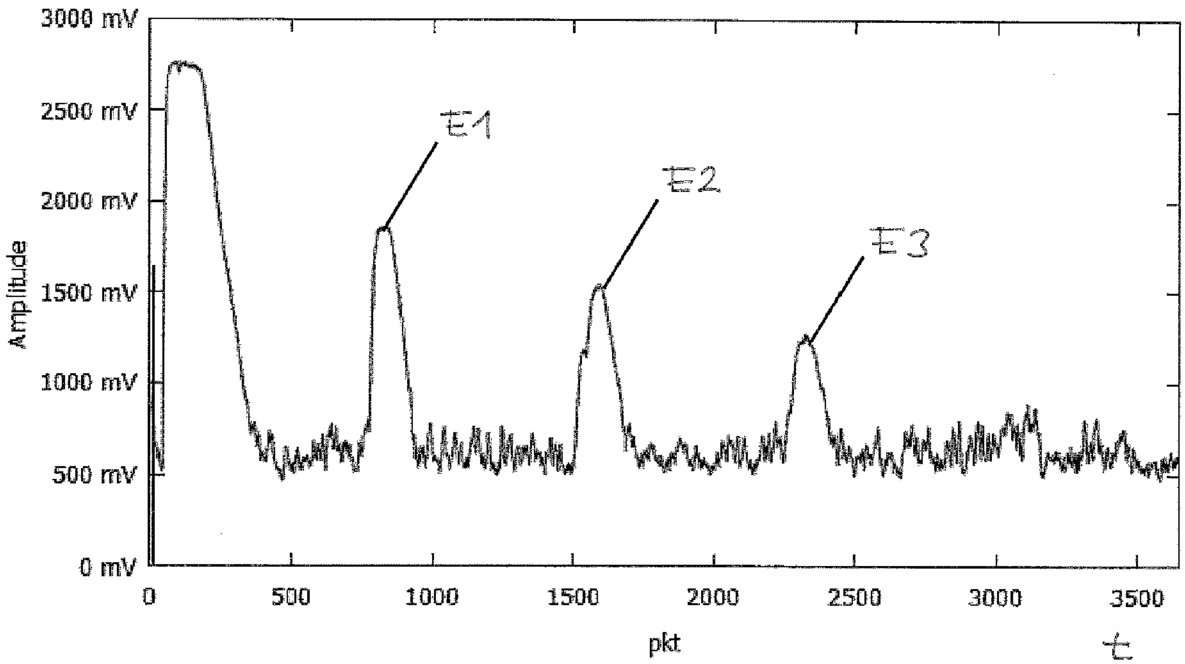
3000 mV
2500 mV
2000 mV
1500 mV
1000 mV
500 mV
0 mV
Amplitude
0
500
1000
1500
2000
2500
3000
3500
pkt
E1
E2
E3
t

Fig. 5

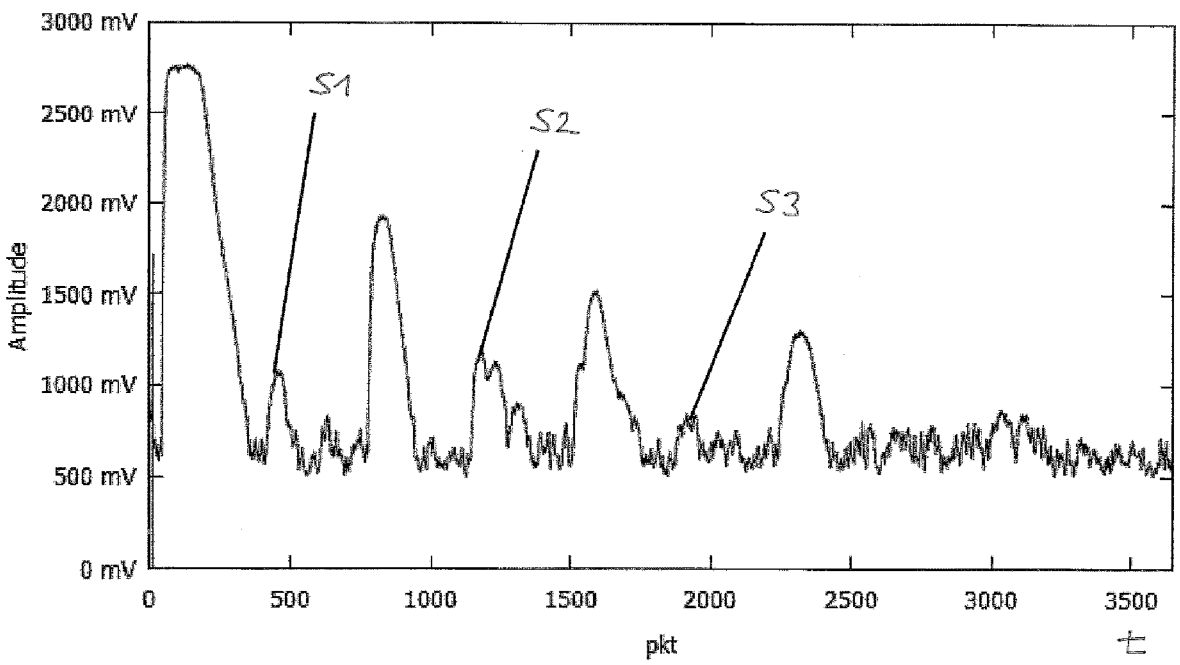
3000 mV
2500 mV
2000 mV
1500 mV
1000 mV
500 mV
0 mV
Amplitude
0
500
1000
1500
2000
2500
3000
3500
pkt
S1
S2
S3
t

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3812293 A1
- EP 2130006 A1
- DE 102009055262 A1